# EUROPEAN PATENT SPECIFICATION

(11) **EP 0 670 981 B1**
(45) Date of publication and mention of the grant of the patent: **28.08.1996**
(21) Application number: 94900921.1
(22) Date of filing: 24.11.1993
(51) Int. Cl.: F16L 33/01, F16L 33/00

(54) **HOSE END FITTING AND HOSE ASSEMBLY**
SCHLAUCHENDANSCHLUSS UND SCHLAUCHAUFBAU
EMBOUT TERMINAL POUR TUYAU ET ENSEMBLE TUYAU

(30) Priority: 24.11.1992 GB 9224548
(43) Date of publication of application: 13.09.1995
(73) Proprietor: DUNLOP LIMITED, London SW1P 2PL (GB)
(72) Inventor: ZANDIYEH, Ali Reza Kambiez, Scartho, Grimsby DN33 3EG (GB); RICHARDS, Stephen John, Grimsby, South Humberside DN37 0UR (GB)
(74) Representative: Badger, John Raymond
(86) International application number: GB9302416
(87) International publication number: WO9412823

(56) References cited:
- DE-A- 1 924 225
- GB-A- 2 027 838
- GB-A- 2 258 507
- US-A- 2 854 030

## Description

This invention provides a hose end fitting and a hose assembly comprising said end fitting in combination with a flexible reinforced hose. The invention relates in particular, although not exclusively, to a hose end fitting and a hose assembly of a large bore type having a bore of at least 4 inches (100 mm), the assembly being constructed typically by building the hose in situ around the end fitting.

Large bore hoses are employed commonly for transporting high volumes of oil such as, for example, when loading and unloading an oil tanker, especially offshore. The hoses may incorporate buoyancy so that they are able inherently to float. For example, GB-A-2 027 838 discloses a hose and end fitting assembly in which the fitting is provided with two annular beads. The tail portion of the beads facing the tail end of the fitting is formed as a conus of approximately 45°. The innermost bead has a greater outer diameter than the outermost bead.

In use the hose assemblies are exposed to arduous conditions and are subject to high loads especially at their end regions, resulting in a potential risk of failure. Sometimes it is possible to reduce the risk of failure by providing additional material but that leads to added costs. Also in the case of offshore floating type hoses the weight of any additional material will necessitate additional buoyancy.

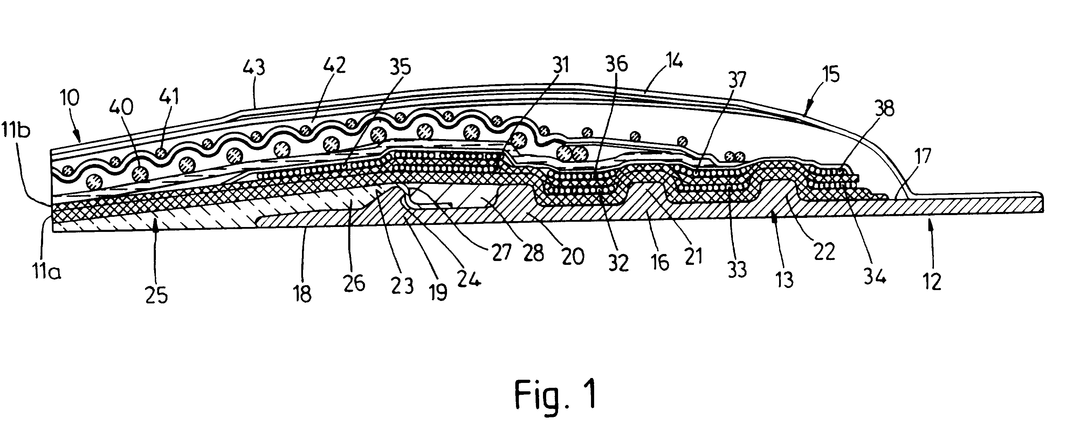

The closest prior art is represented by a conventional hose and end fitting assembly as shown in part, in longitudinal cross-section, in Figure 1. The hose 10 is of a large bore (24 inch bore) and has a single, mini-layer type reinforcing carcass 11.

The end fitting 12 has an end location flange (not shown) integral with one end of a beaded insert 13 around which the end region 14 of hose 15 is built.

The insert 13 comprises a tubular body 16 of circular cross-section and an outer surface 17 tapered at a first, inner tail end 18 but otherwise cylindrical apart from the presence of four uniformly retention beads 19-22.

The innermost bead 19 is of a saw-tooth shape in cross-section. It has a first, inclined surface 23 adjacent the tapered end 18 and a second, abutment face 24 which lies substantially perpendicular to the longitudinal axis of the fitting. The other three beads 20-22 are of a generally rectangular shape in cross-section.

The hose 10 has an inner lining 25 which is provided at the end of the hose with a thickened skirt 26 and the lining terminates adjacent the sawtooth bead 19 apart from a thin tail layer 27. The lining layer 25 has a maximum outer diameter over the bead 19 and decreases in diameter progressively to a minimum (which is the normal outer diameter of the lining over the major part of the length of the hose) at a position at least 2.0 metres inward from the end 14 of the hose. The tail layer 27 extends over the peak of the bead 19, downwards adjacent the abutment face 24 and axially over the surface 17 to terminate between the bead 19 and adjacent bead 20.

A filler ring 28 of incompressible polymer is provided over the tail layer 27 to fill the space between the beads 19 and 20.

The main reinforcement carcass 11 extends over the lining 25 and filler ring 28 to lie in contact with and conform to the shape of the beads 20-22. The carcass 11 is held against the end fitting by a binding wire assembly 30 which comprises several layers of helically extending binding wires. A first, major group 11a of layers of the mini-layer reinforcing carcass 11 is secured against the end fitting by an inner binding wire assembly 31 which extends from above the peak of bead 19 to above the peak of bead 20. This assembly holds the layers 11a against the filler ring 28. Three other inner binding wire assemblies 32,33,34 hold the layers 11a in a distorted configuration in the grooves between the beads 20,21 & 22 and to the right of bead 22. These assemblies and the assembly 31 are formed from a single wire cord wound at touch pitch to form the assemblies and at greater pitch to extend between the assemblies.

The remaining carcass layers 11b are applied over the wire assemblies 31-34 and are held against the end fitting by outer wire assemblies 35-38. Assembly 35 extends axially around the tapered end 18 of the end fitting, the first and second beads 19,20 and the space between those beads. The assemblies 36-38 lie around the inner binding wire assemblies 32-34 respectively, and the assemblies 35-58 are formed from a single length of wire cord in the same manner as the assemblies 31-34.

From the foregoing it will be understood that the reinforcing carcass is held firmly against the end fitting over the whole of that part of its length for which it is relatively undistorted, i.e. from the end 18, over the bead 19, filler ring 28 and second bead 20. In contrast all of the layers are secured at axially localised regions where the layers lie distorted to follow the contours provided by the beads 20-22.

The bound reinforcing carcass is surrounded by a helical crush resisting wire 40 and layers 41,42,43 of inner and outer component layers of the base cover.

The aforedescribed hose construction can provide good reliability but particularly if subject to conditions beyond its design specification there is a risk of premature bursting or of cracking of the lining layer in the vicinity of the end fitting.

The present invention seeks to provide an improved hose assembly and an improved end fitting for a hose whereby improved strength and fatigue resistance may be achieved without an undue increase of weight.

In accordance with one of its aspects the present invention provides a hose end fitting for large bore hose comprising a tubular body for location in the end of a reinforced hose, sard body having a tail end which in use lies inwards of the end of the hose and a second, outer end which in use extends beyond an axial end of the hose, the outer surface of said body being provided with a plurality of axially spaced retention beads, that bead of the plurality which lies nearest the tail end of the body being a low profile bead having a rear portion which faces away from the tail end and which as considered in longitudinal cross-section is of a low aspect ratio profile whereby the axial length of that rear portion from the position of maximum radius of the bead to the position of minimum radius is at least 1.5 times the difference between said radii, and a second bead spaced axially from the low profile bead by a distance at least equal to the axial length of the rear part of said low profile bead and having a greater maximum radius than the low profile bead.

The invention provides therefore that the radially outermost surface of the second bead lies at a greater radius than the maximum radius of the low profile bead.

Preferably said ratio of axial length to radial thickness of the bead rear portion is at least 2:1 and more preferably lies in the range 2:1 to 3:1.

The rear portion of the low profile bead may be curved in cross-section and may be of a part circular shape thereby to provide a rearward facing surface of part spherical shape. Other curved profiles, or a rectilinear profile to define a frusto-conical surface, may be employed, the profile being selected to provide a substantially gradual reduction of diameter over the rear part of the bead particularly as compared with conventional beads which feature an abrupt reduction of diameter at the rear part of a bead.

The present invention further provides a series of end fittings of different bore sizes wherein the aforedescribed ratio increases progressively with increase in bore size. It may increase from approximately 1.5:1 for a 4" bore to approximately 2.5:1 for a 24" bore. The range may include a ratio of approximately 2.2:1 for a 16" bore.

The other, forward facing surface of the low profile retention bead which faces towards the tail end of the fitting preferably also has a profile for which the ratio of axial length to radial thickness is at least 1.5:1. The forward facing surface of the low profile retention bead has a profile which is a reverse of that of the rearward facing surface so that the overall profile of that bead as considered in longitudinal cross-section is symmetrical about a plane containing the outermost circumference of the bead.

Preferably said low profile retention bead is spaced from the tail end of the end fitting by a tail portion having an axial length at least equal to the axial length of the rear part of the bead, and preferably at least 1.5 times that length.

The second bead may have a rearward facing surface (i.e. which faces away from the low profile bead) which lies at least in part inclined to the longitudinal axis of the fitting. The other surface of the bead, facing toward the low profile bead, may be relatively steep and may lie substantially in a plane perpendicular to said longitudinal axis.

The second, outer end of the end fitting may be formed integrally with a flange structure. The beads may be formed integrally with the body of the end fitting or may be preformed to a selected shape and welded or otherwise secured to the body.

The invention further provides a hose assembly comprising the end fitting of the present invention surrounded by the end of a reinforced hose wherein the hose comprises at least one main reinforcement layer secured to the fitting by two assemblies of binding wires axially spaced and arranged to act at opposite sides of the low profile retention bead, with the wire material of one assembly being arranged not to extend into association with the other assembly.

Preferably the binding wire assembly neighbouring the rearward facing surface of the low profile bead acts primarily to compress the reinforcement layer radially against a cylindrical outer surface of the end fitting and secondarily against a part of that rearward facing bead surface which is adjacent that cylindrical surface. That binding wire assembly may be of a kind comprising a plurality of layers of binding wire.

The binding wire assembly neighbouring the other, forward facing surface of the low profile bead preferably is of a single layer thickness, and may comprise three or more axially spaced groups of wire in which in each group successive turns of wire lie at touch pitch.

A minority of the groups may be positioned to act against a forward facing surface of the low profile bead where that surface lies inclined to the longitudinal axis of the fitting.

The main reinforcement carcass preferably comprises a plurality of layers of reinforcement. Preferably only some of said reinforcement layers are secured directly either side of the low profile bead by the said binding wire assemblies. Preferably it is only less than half of the total number of layers that are secured in that manner and preferably it is only less than one third of the total number of layers that are secured in that manner.

The reinforcement layers may be split into two groups by said binding wire assemblies, which are hereafter referred to as first binding wire assemblies, and the second, outer group of layers may terminate further from the tail end of the fitting than the first, inner layer(s ).

The outer group is preferably arranged to extend over a second retention bead and to be secured to the fitting at either side of that bead by two second binding wire assemblies corresponding respectively with the two first binding wire assemblies which secure the inner layer(s) either side of the low profile bead.

The outer group of layers additionally may be secured about the tail portion by a binding wire assembly which comprises three or more axially spaced groups. The resulting three binding wire assemblies provided around the outer group of reinforcement layers may be separate from one another thereby to avoid the presence of a binding wire over the peak of either of the retention beads.

The first inner layer, or group of layers may terminate between the low profile bead and the second bead.

Preferably the main carcass comprises two groups of layers which are separated by a rubber interlayer arranged to act as a secondary lining layer. The interlayer may extend for the full length of the hose assembly and connect with the innermost lining about the axial ends of the inner layer(s) of reinforcement to provide leak protection in the event of cracking or a similar failure of the innermost lining.

Lining layer material may be employed to ensure that the space between the low profile and second retention beads is occupied fully and thereby provides support for the outer group of layers so that they may extend free from distortion between the regions of the peaks of the two beads.

The lining layer of the hose, lying inwards of the or all layers of the carcass reinforcement, preferably is of a uniform thickness along the length of the hose to a position within 1 metre and more preferably within 500 mm of the tail of the end fitting. From that position the outer diameter of the lining increases progressively to a maximum where it extends over the peak of the low profile retention bead. Preferably it increases at a uniform rate from its minimum outer diameter to a position around the tail portion of the end fitting.

Part of the tail portion of the end fitting, being a part nearest the tail end preferably has a tapered external surface, the taper preferably lying in the angle range 2 to 5 degrees.

Embodiments of the present invention will now be described by way of example and with reference to the accompanying diagrammatic drawings wherein:-
Figure 2 is a longitudinal sectional view of part of a hose and end fitting assembly in accordance with the present invention;
Figure 3 is a view similar to that of Figure 2 of a hose assembly having a modified end fitting;
Figure 4 is a side view, part in longitudinal section, of the end fitting of Figure 3, and
Figure 5 is a view similar to that of Figure 2 of another hose assembly of modified construction.

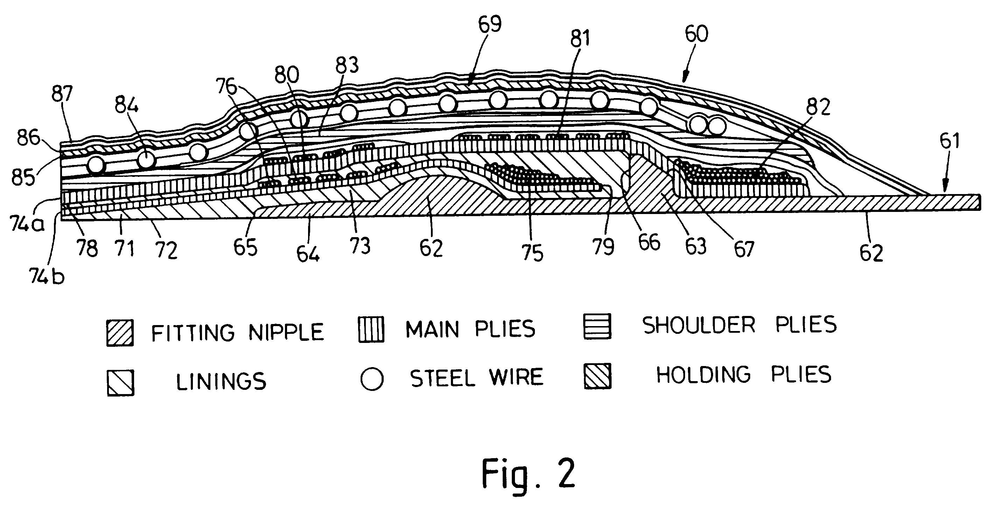

In the construction of Figure 2 a hose assembly 60 comprises a tubular end fitting 61 having a smooth cylindrical 24" diameter bore and two external beads 62,63.

The outer surface of the fitting 61 at each side of the beads is cylindrical except for a part of the axial length of the inner end portion 64 which is slightly tapered at an angle range of between 2 and 5 degrees to the longitudinal axis over the first half of the distance from the inner end 65 to a first 62 of the retention beads.

The first bead 62 is of a part-circular double symmetrical profile as viewed in section in Figure 2 and is of a low profile. The extent of the profile in the longitudinal direction of the fitting in this example is 2.5 times the extent to which the profile extends outwards of the neighbouring cylindrical surfaces of the fitting. The tail portion 64 has an axial length which equals that of the first bead, i.e. twice the axial extent of the rearward facing part of the bead.

The second retention bead 63 is substantially of a saw-toooth profile, but of a reverse orientation compared with that of a conventional hose end fitting. The bead 63 has an abutment face 66 which lies in a plane perpendicular to the longitudinal axis, facing the bead 62, and a frusto-conical face 67 which faces outwards and away from the first bead 62, at an angle of 45 degrees.

The bead 63 extends radially outwards from the cylindrical outer surfaces of the fitting by approximately 60% further than the bead 62.

The hose and end fitting assembly is constructed by building the hose end portion 69 around the end fitting 61.

A hose lining layer 71 has an inner surface 72 which defines a bore corresponding to that of the end fitting and an outer surface which increases progressively from a minimum diameter at a position approximately 280 mm inwards from the hose fitting inner end 65 to a maximum over the first retention bead. The lining layer 71 terminates substantially adjacent the second bead 63.

The main multi-layer reinforcing carcass 74 of the hose is divided into two groups of layers, an inner group 74a and an outer group 74b. The inner group comprises a minority of the number of reinforcing layers, in this case a third of the total.

The inner group 74a conforms to the contours of the lining layer 71 and also terminates substantially adjacent the second retention bead 63. It is held in position around the end fitting by two independent inner groups 73,75 of binding wires provided one each side of the first bead 62. Each binding wire is a multi-filament twisted cord of brass plated steel wires.

A first group 73 surrounds the tapered end zone of the fitting and comprises five zones 76 slightly spaced apart axially to allow surrounding hose wall material to bond to the layers 74a. Each is formed from a single thickness of wire cord, and the five zones may be formed from a single continuous wire cord.

The second group 75 comprises four superimposed zones each of a single thickness of wire cord, and the zones may be formed from a single continuous wire cord.

The zones of group 75 are superimposed in an assymetric manner biassed towards the bead 62 so as to hold the reinforcement layers 74a uniformly against the bead and in particular the region where the bead meets the cylindrical surface of the fitting, as well as to hold it against that cylindrical surface.

The inner group 74a is covered by a layer 78 of polymeric material, typically integral with that of the lining layer by extending around the axial end of the group 74a. That layer is thickened in the region between the beads 62,63 so as to occupy fully the available space therebetween, and it acts as an inter-layer to separate the inner group 74a from the surrounding outer group 74b of carcass reinforcing layers.

The outer group 74b extends further than the inner group 74a and surrounds the frusto-conical face 67 of the second bead and part of the neighbouring outer cylindrical surface of the end fitting.

The outer group 74b is held in position by three groups 80-82 of binding wires. A first group 80 surrounds the tapered end zone, a second group 81 lies axially between the peaks of the first and second beads 62,63 and the third group 82 lies alongside the frusto-conical face of the second bead 63.

The groups 80 and 81 are each constructed in a manner similar to the aforedescribed inner group 73 and the group 82 corresponds substantially with the aforedescribed group 75.

The hose construction is then completed by the application of shoulder plies 83 of elastomeric material to end regions of the hose (to extend over approximately the length of the lining layer which is tapered), a helical crush resisting wire 84 and layers 85,86,87 of inner and outer component layers of the hose cover.

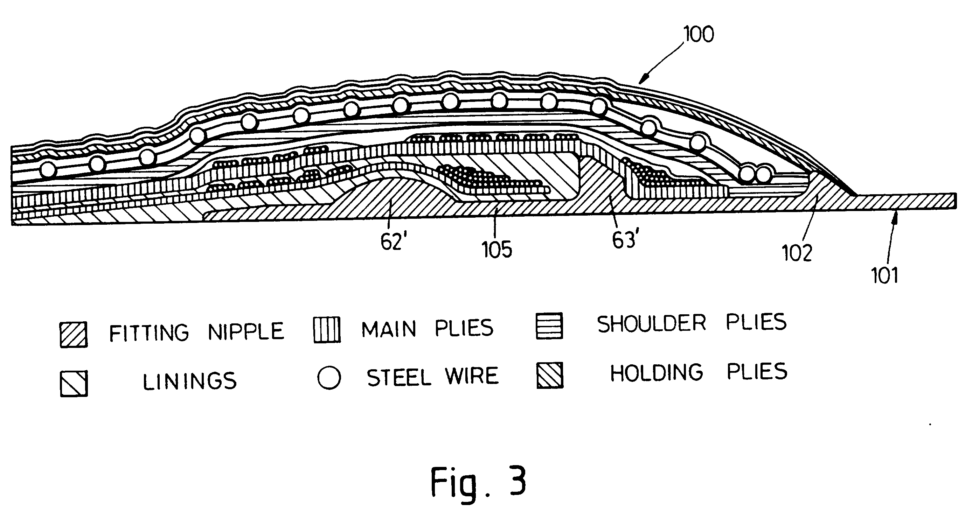

In a second embodiment of the invention, shown in Figure 3, a hose assembly 100 comprises an end fitting 101 of a kind similar to the fitting 61 of Figure 1 apart from the provision of a third bead 102 at an outward end of the fitting. The rib 102 is of a generally similar profile to that of the aforedescribed second bead 63, but is of a reduced radial extent. It serves as a building aid to assist smooth termination of the hose cover layers and does not function to provide axial location of the fitting relative to the main carcass reinforcement layers.

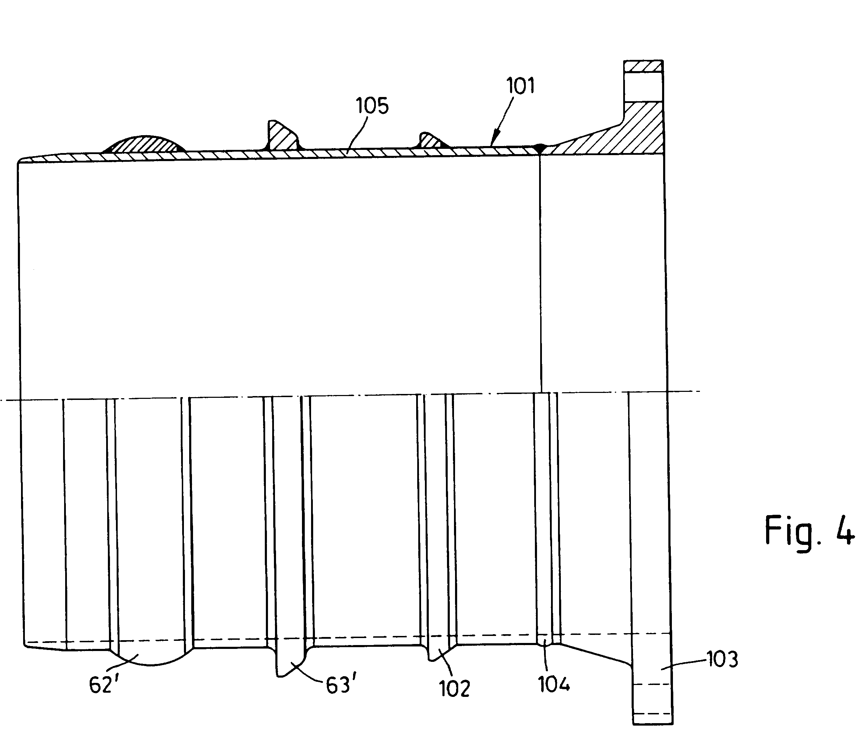

The end fitting 101 of Figure 3 is shown in more detail in Figure 4. This shows that the three beads 62',63' and 102 may be preformed as individual rings which are then welded to the cylindrical tubular body portion 105 of the fitting, and that an end flange 103 may be welded at 104 to that body portion.

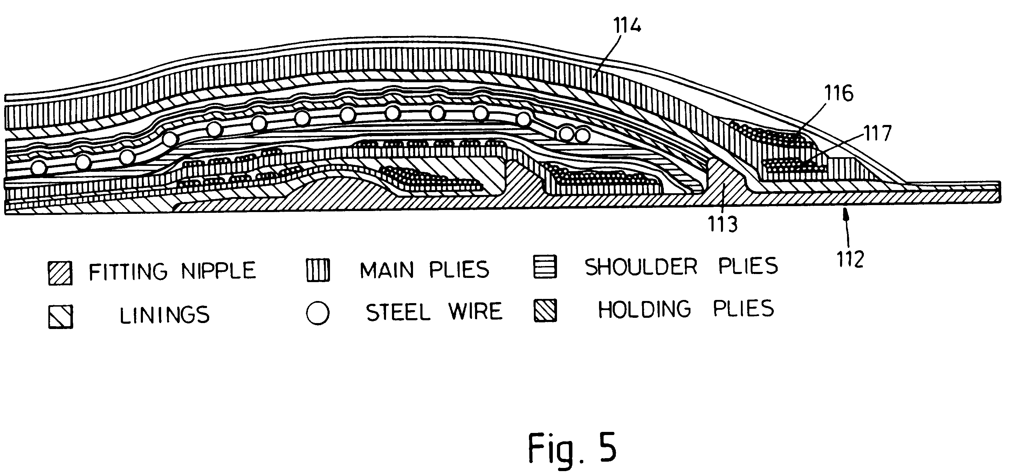

In a further embodiment shown in Figure 5 a hose assembly 110 comprising a twin carcass type hose 111 which incorporates an end fitting 112 which is provided with an additional retention bead 113 which corresponds substantially with the bead 63' of Figure 3.

The additional bead 113 is located mid-way between the bead 63' and outer end bead 102' and serves to assist with retention of the secondary carcass layers 114. The secondary carcass is held against a frusto-conical surface 115 of the bead 113 by an asymmetric arrangement of superimposed layers of cords 116 corresponding substantially with the aforedescribed groups 75,82. The fourth, outer bead 102' serves to assist in building and locating the hose cover layers and in achieving a smooth external profile.

By providing a low profile retention bead it is found that there is a useful improvement in the durability of the hose as compared with a hose of conventional construction.

## Claims

1. A hose end fitting for large bore hose comprising a tubular body (61) for location in the end of a reinforced hose, said body having a tail end (64) which in use lies inwards of the end of the hose and a second, outer end which in use extends beyond an axial end of the hose, the outer surface of said body being provided with a plurality of axially spaced retention beads (62,63), a first bead of the plurality which lies nearest the tail end (64) of the body having a rear portion which faces away from the tail end and which as considered in longitudinal cross-section is of a low aspect ratio profile whereby the axial length of that rear portion from the position of maximum radius of the bead to the position of minimum radius is at least 1.5 times the difference between said radii, wherein a second retention bead (63) is spaced axially from the low profile bead by a distance at least equal to the axial length of the rear part of said low profile bead (62) and has a greater maximum radius than the maximum radius of the low profile bead.

2. A hose end fitting as claimed in claim 1, characterised in that said ratio of axial length to radial thickness of the rear portion of the low profile is at least 2:1.

3. A hose end fitting as claimed in claim 2, characterised in that said ratio is no more than 3:1.

4. A hose end fitting as claimed in any one of the preceding claims, characterised in that the rear portion of the low profile bead (62) is curved in cross-section.

5. A hose end fitting as claimed in claim 4, characterised in that the low profile bead (62) is of a part circular shape thereby to provide a rearward facing surface of part spherical shape.

6. A hose end fitting as claimed in claim 4, characterised in that the low profile bead (62) is selected to provide a substantially gradual reduction of diameter over the rear part of the bead.

7. A hose end fitting as claimed in any one of the preceding claims, characterised in that the other, forward facing surface of the low profile retention bead (62) which faces towards the tail end of the fitting has a profile for which the ratio of axial length to radial thickness is at least 1.5:1.

8. A hose end fitting as claimed in any one of the preceding claims, characterised in that said low profile retention bead (62) is spaced from the tail end (65) of the end fitting by a tail portion (64) having an axial length at least equal to the axial length of the rear part of the bead.

9. A hose end fitting as claimed in any one of the preceding claims, characterised in that the second bead (63) has a rearward facing surface (67) which lies at least in part inclined to the longitudinal axis of the fitting.

10. A series of end fittings each as claimed in any one of the preceding claims of different bore sizes characterised in that said ratio of the low profile bead increases progressively with increase in bore size.

11. A hose assembly comprising the end fitting as claimed in any one of the preceding claims surrounded by the end of a reinforced hose characterised in that the hose comprises at least one main reinforcement layer (74) secured to the fitting by two assemblies (73,75) of binding wires axially spaced and arranged to act at opposite sides of the low profile retention bead, with the wire material of one assembly being arranged not to extend into association with the other assembly.

12. A hose assembly as claimed in claim 11, characterised in that the second retention bead (63) provides location for an outer group of reinforcement layers (74a) and lining layer material (78) is employed to ensure that the space between the two beads (62,63) is occupied fully thereby to support the outer group of layers (74a) so that they extend free from distortion between the regions of the peaks of the two beads.

13. A hose assembly as claimed in claim 11 or claim 12, characterised in that the lining layer (71) of the hose, lying inwards of the or all layers of the carcass reinforcement, is of a uniform thickness along the length of the hose to a position within 1 metre, preferably 500 mm, of the tail of the end fitting.

14. A hose assembly as claimed in claim 11 or claim 13, characterised in that a part of the tail portion (64) of the end fitting, being a part nearest the tail end (65) has a tapered external surface.

## Patentansprüche

1. Schlauchendanschluß für einen Schlauch mit großem Öffnungsdurchmesser, wobei der Anschluß folgendes aufweist: einen ringförmigen Körper (61) zum Anbringen am Ende eines verstärkten Schlauches, wobei der Körper ein hinteres Ende (64) hat, das im Einsatz vom Ende des Schlauchs aus in Richtung nach innen liegt, und ein zweites äußeres Ende, das sich im Einsatz über ein axiales Ende des Schlauches hinweg erstreckt, wobei die äußere Oberfläche des Körpers mit einer Vielzahl axial beabstandeter Zurückhaltewulste (62, 63) versehen ist, wobei ein erster Wulst der Vielzahl, der dem hinteren Ende (64) des Körpers am nächsten liegt, einen rückwärtigen Teil hat, der weg vom hinteren Ende zeigt, und der in Längsrichtung querschnittsmäßig gesehen ein Profil hat, das ein geringes Längenverhältnis hat, wobei die axiale Länge jenes rückwärtigen Teils von der Position eines maximalen Radius des Wulstes zu der Position eines minimalen Radius wenigstens das 1,5-fache der Differenz zwischen den Radien beträgt, wobei ein zweiter Zurückhaltewulst (63) vom Wulst mit geringem Profil um einen Abstand beabstandet ist, der wenigstens gleich der axialen Länge des rückwärtigen Teils des Wulstes mit geringem Profil (62) ist, und der einen größeren maximalen Radius als den maximalen Radius des Wulstes mit geringem Profil hat.

2. Schlauchendanschluß nach Anspruch 1, dadurch gekennzeichnet, daß das Verhältnis der axialen Länge zur radialen Dicke des rückwärtigen Teils des geringen Profils wenigstens 2:1 ist.

3. Schlauchendanschluß nach Anspruch 2, dadurch gekennzeichnet, daß das Verhältnis nicht größer als 3:1 ist.

4. Schlauchendanschluß nach einem der vorangehenden Ansprüche, dadurch gekennzeichnet, daß der rückwärtige Teil des Wulstes mit geringem Profil (62) im Querschnitt gekrümmt ist.

5. Schlauchendanschluß nach Anspruch 4, dadurch gekennzeichnet, daß der Wulst mit geringem Profil (62) teilkreisförmig ist, um dadurch eine nach hinten zeigende Oberfläche mit einer teilsphärischen Form zu schaffen.

6. Schlauchendanschluß nach Anspruch 4, dadurch gekennzeichnet, daß der Wulst mit geringem Profil (62) derart ausgewählt ist, daß er eine im wesentlichen allmähliche Reduzierung des Durchmessers über den rückwärtigen Teil des Wulstes zeigt.

7. Schlauchendanschluß nach einem der vorangehenden Ansprüche, dadurch gekennzeichnet, daß die andere nach vorn zeigende Oberfläche des Zurückhaltewulstes mit geringem Profil (62), die zum hinteren Ende des Anschlusses zeigt, ein Profil hat, für das das Verhältnis der axialen Länge zur radialen Dicke wenigstens 1,5:1 ist.

8. Schlauchendanschluß nach einem der vorangehenden Ansprüche, dadurch gekennzeichnet, daß der Zurückhaltewulst mit geringem Profil (62) vom hinteren Ende (65) des Endanschlusses um einen hinteren Teil (64) beabstandet ist, der eine axiale Länge hat, die wenigstens gleich der axialen Länge des rückwärtigen Teils des Wulstes ist.

9. Schlauchendanschluß nach einem der vorangehenden Ansprüche, dadurch gekennzeichnet, daß der zweite Wulst (63) eine nach hinten zeigende Oberfläche (67) hat, die wenigstens teilweise zur Längsachse des Anschlusses geneigt liegt.

10. Reihe von Endanschlüssen, wie sie jeweils in einem der vorangehenden Ansprüche beansprucht sind, mit unterschiedlichen Öffnungsdurchmessergrößen, dadurch gekennzeichnet, daß das Verhältnis des Wulstes mit geringem Profil mit einem Anwachsen der Öffnungsdurchmessergröße progressiv anwächst.

11. Schlauchaufbau mit dem Endanschluß nach einem der vorangehenden Ansprüche, der vom Ende eines verstärkten Schlauchs umgeben ist, dadurch gekennzeichnet, daß der Schlauch wenigstens eine Hauptverstärkungsschicht (74) aufweist, die an dem Anschluß durch zwei Anordnungen (73, 75) von Bindedrähten gesichert ist, die axial beabstandet sind, und die derart angeordnet sind, daß sie an entgegengesetzten Seiten des Zurückhaltewulstes mit geringem Profil wirken, wobei das Drahtmaterial einer Anordnung derart angeordnet ist, daß sie sich nicht zusammen mit der anderen Anordnung erstreckt.

12. Schlauchaufbau nach Anspruch 11, dadurch gekennzeichnet, daß der zweite Zurückhaltewulst (63) eine Stelle für eine äußere Gruppe von Verstärkungsschichten (74a) bietet, und ein Verkleidungsschichtenmaterial (78) verwendet wird, um sicherzustellen, daß der Raum zwischen den zwei Wulsten (62, 63) vollständig aufgefüllt ist, um dadurch die äußere Gruppe von Schichten (74a) zu stützen, so daß sie sich frei von einer Verdrillung zwischen den Bereichen der Spitzen der zwei Wulste erstrecken.

13. Schlauchaufbau nach Anspruch 11 oder 12, dadurch gekennzeichnet, daß die Verkleidungsschicht (71) des Schlauchs, die von der oder von allen Schichten der Gerippeverstärkung aus nach innen liegt, entlang der Länge des Schlauchs bis zu einer Positicn innerhalb 1 Meters, vorzugsweise 500 mm, vom hinteren Endes des Endanschlusses aus einer einheitlichen Dicke ist.

14. Schlauchaufbau nach Anspruch 11 oder 13, dadurch gekennzeichnet, daß ein Teil des hinteren Teils (64) des Endanschlusses, der ein Teil ist, der dem hinteren Ende (65) am nächsten ist, eine kegelförmige externe Oberfläche aufweist.

## Revendications

1. Raccord d'extrémité de tuyau souple pour tuyau souple de grand diamètre comprenant un corps tubulaire (61) pour positionnement dans l'extrémité d'un tuyau souple renforcé, ledit corps comportant une extrémité arrière (64) qui, en utilisation, se trouve à l'intérieur de l'extrémité du tuyau souple et une seconde extrémité extérieure qui, en utilisation, se trouve au-delà d'une extrémité axiale du tuyau souple, la surface extérieure dudit corps étant munie d'une pluralité de nervures de maintien axialement espacées (62, 63), une première nervure de la pluralité qui se trouve la plus proche de l'extrémité arrière (64) du corps ayant une partie arrière qui est en regard et à l'opposé de l'extrémité arrière et qui, comme considéré en section transversale longitudinale, est d'un profil de rapport de côtés à faible hauteur d'où il résulte que la longueur axiale de cette partie arrière à partir de la position de rayon maximal de la nervure à la position de rayon minimal est au moins 1,5 fois la différence entre lesdits rayons, dans lequel une seconde nervure de maintien (63) est axialement espacée de la nervure à faible hauteur sur une distance au moins égale à la longueur axiale de la partie arrière de ladite nervure à faible hauteur (62) et présente un rayon maximal plus grand que le rayon maximal de la nervure à faible hauteur.

2. Raccord d'extrémité de tuyau souple selon la revendication 1, caractérisé en ce que ledit rapport de la longueur axiale à l'épaisseur radiale de la partie arrière de faible hauteur est d'au moins 2:1.

3. Raccord d'extrémité de tuyau souple selon la revendication 2, caractérisé en ce que ledit rapport n'est pas supérieur à 3:1.

4. Raccord d'extrémité de tuyau souple selon l'une quelconque des revendications précédentes, caractérisé en ce que la partie arrière de la nervure à faible hauteur (62) est incurvée en section transversale.

5. Raccord d'extrémité de tuyau souple selon la revendication 4, caractérisé en ce que la nervure à faible hauteur (62) est d'une forme circulaire en partie pour procurer de ce fait une surface en regard vers l'arrière de forme sphérique en partie.

6. Raccord d'extrémité de tuyau souple selon la revendication 4, caractérisé en ce que la nervure à faible hauteur (62) est sélectionnée pour procurer une réduction sensiblement graduelle du diamètre sur la partie arrière de la nervure.

7. Raccord d'extrémité de tuyau souple selon l'une quelconque des revendications précédentes, caractérisé en ce que l'autre surface en regard vers l'avant de la nervure de maintien à faible hauteur (62) qui est en regard vers l'extrémité arrière du raccord présente un profil pour lequel le rapport de la longueur axiale à l'épaisseur radiale est au moins de 1,5:1.

8. Raccord d'extrémité de tuyau souple selon l'une quelconque des revendications précédentes, caractérisé en ce que ladite nervure de maintien à faible hauteur (62) est espacée de l'extrémité arrière (65) du raccord d'extrémité par une partie arrière (64) présentant une longueur axiale au moins égale à la longueur axiale de la partie arrière de la nervure.

9. Raccord d'extrémité de tuyau souple selon l'une quelconque des revendications précédentes, caractérisé en ce que la seconde nervure (63) présente une surface en regard vers l'arrière (67) qui se trouve au moins en partie inclinée par rapport à l'axe longitudinal du raccord.

10. Séries de raccords d'extrémité chacun selon l'une quelconque des revendications précédentes de dimensions d'alésage différentes caractérisés en ce que ledit rapport de la nervure à faible hauteur augmente progressivement avec l'augmentation de la dimension de l'alésage.

11. Ensemble de tuyau souple comprenant le raccord d'extrémité selon l'une quelconque des revendications précédentes entouré par l'extrémité d'un tuyau souple renforcé caractérisé en ce que le tuyau souple comprend au moins une couche principale de renforcement (74) fixée au raccord par deux ensembles (73, 75) de fils d'attache axialement espacés et disposés pour agir sur les côtés opposés de la nervure de maintien à faible hauteur, avec le matériau de fil d'un ensemble étant disposé pour ne pas s'étendre en association avec l'autre ensemble.

12. Ensemble de tuyau souple, selon la revendication 11, caractérisé en ce que la seconde nervure de maintien (63) assure le positionnement pour un groupe extérieur de couches de renforcement (74a) et le matériau de couche de revêtement (78) est employé pour assurer que l'espace entre les deux nervures (62, 63) est totalement occupé pour supporter de ce fait le groupe extérieur des couches (74a) d'une manière telle qu'il s'étende sans déformation entre les régions des crêtes des deux nervures.

13. Ensemble de tuyau souple selon la revendication 11 ou la revendication 12, caractérisé en ce que la couche de revêtement (71) du tuyau souple, se trouvant à l'intérieur de la couche ou de toutes les couches du renforcement des carcasses, est d'une épaisseur uniforme le long de la longueur du tuyau souple à une position à l'intérieur de 1 mètre, de préférence 500 mm à l'arrière du raccord d'extrémité.

14. Ensemble de tuyau souple selon la revendication 11 ou la revendication 13, caractérisé en ce qu'une partie de la partie arrière (64) du raccord d'extrémité, qui est une partie la plus proche de l'extrémité arrière (65), présente une surface externe effilée.
